# EUROPEAN PATENT SPECIFICATION

(11) **EP 1 693 747 B1**
(45) Date of publication and mention of the grant of the patent: **23.02.2011**
(21) Application number: 06100278.8
(22) Date of filing: 12.01.2006
(51) Int. Cl.: G06F 9/44

(54) **Discoverability of tasks using active content wizards and help files**
Erkennung von Aufgaben unter Verwendung aktiver Inhaltsassistenten und Hilfedateien
Identification de tâches avec des assistants de contenu actifs et des fichiers d'aide

(30) Priority: 17.02.2005 US 59737
(43) Date of publication of application: 23.08.2006
(73) Proprietor: Microsoft Corporation, Redmond, WA 98052 (US)
(72) Inventor: Bala, Aravind, Redmond, WA 98052 (US)
(74) Representative: Grünecker, Kinkeldey, Stockmair & Schwanhäusser Anwaltssozietät

(56) References cited:
- WO-A-99/66394
- US-A- 5 825 356
- US-A1- 2003 016 238
- US-A1- 2004 268 259
- HALSTED, K.L.; ROBERTS, J.H.: "Eclipse help system: an open source user assistance offering" PROCEEDINGS OF THE 20TH ANNUAL INTERNATIONAL CONFERENCE ON COMPUTER DOCUMENTATION, [Online] 20 October 2002 (2002-10-20), pages 49-59, XP002397084 Toronto, Canada ISBN: 1-58113-543-2 Retrieved from the Internet: URL:http://portal.acm.org/citation.cfm?id= 584955.584964> [retrieved on 2006-08-30]

## Description

### CROSS-REFERENCE TO RELATED APPLICATIONS

Reference is hereby made to the following copending and commonly assigned patent applications: U.S. Application Serial No. 10/337,745, filed January 7, 2003, entitled "ACTIVE CONTENT WIZARD: EXECUTION OF TASKS AND STRUCTURED CONTENT" which was published on July 8, 2004 as Publication No. US 2004/0130572 A1; U.S. Application Serial No. 10/887,058, filed July 8, 2004, entitled "AUTOMATIC TEXT GENERATION" which was published on February 10, 2005 as Publication No. US 2005/0033713 A1; U.S. Application Serial No. 10/940,479, filed September 14, 2004, entitled "ACTIVE CONTENT WIZARD TESTING"; U.S. Application Serial No. 10/887,543, filed July 8, 2004, entitled "IMPORTATION OF AUTOMATICALLY GENERATED CONTENT" which was published on December 16, 2004 as Publication No. US 2004/0255270 A1; U.S. Application Serial No. 10/887,414, filed July 8, 2004, entitled "AUTOMATIC IMAGE CAPTURE FOR GENERATING CONTENT" which was published on December 9, 2004 as Publication No. US 2004/0250214 A1; U.S. Application Serial No. 11/060,181, filed February 17, 2005, entitled "USING EXISTING CONTENT TO GENERATE ACTIVE CONTENT WIZARD EXECUTABLES FOR EXECUTION OF TASKS".

### BACKGROUND OF THE INVENTION

The present invention relates to help content and/or Active Content Wizards (ACW's) in software applications. More specifically, the present invention relates to methods of aiding a user in discovering tasks which can be executed with the use of help content or ACW'_{S}.

Graphical User Interfaces (GUIs) provide a visual representation of all the features available in an application. If a user knows where to browse and look for things, he or she can see what's possible (i.e., what tasks can be completed, etc.). For a user who knows where something is, and can remember it, GUIs are very predictable and controllable.

GUI's are optimized for efficiency. *Widgets* (i.e., tabs, check boxes, slide bars, buttons, and other UI control elements), words, and icons are better for recognition than using language. It can be faster to recognize the symbol B than it is to recognize the command "Make this bold" if the user knows what he or she is looking for. Additionally, a lot more small buttons can be fit on the screen than can 5 to 7 word commands.

As the number of features supported by software applications, application suites and operating systems increases, features get buried under dropdowns, context menus, dialogs etc. Novices and sometimes even advanced users find it difficult to understand the actions available to them when using the application. They also fail to find features that they know must be there, because the controls to access them are difficult to find.

To find out how to use a feature that they know exists, users:
- Explore: browse around the UI in likely-looking places, hoping to spot a useful-seeming menu name or dialog.
- Learn: ask friends, read help topics or books, or learn from newsgroups.

To discover what features exist that they might want to use, users:
- Learn: run a tutorial, take a course, or browse a book. Observe friends do something with the software, and ask, "How did you make it do *that?"*
- Explore: after a first-time exploration to find out what's possible, users typically don't explore much. Users explore only to find the way to accomplish some goal. Once they have a way that works, most users stick to it, and don't look for better ways, or look to see what else they could do.

The current solution to providing user assistance is to bundle help topics with the application that document what is possible and how to accomplish users' goals using the widgets in the GUI. These topics are written in language that users understand. Also, help topics can be easily updated and can be added after the application has shipped. However, there are a number of problems with help topics that makes this less valuable to users than it should be.
1. Accessing help loses the context of the application. Users are required to go to a separate Help place which is a new window or the Web. They have to either try to match their problem with the topic taxonomy, or phrase what they want to do as keywords in a search box. It might be much faster for users to just browse the GUI to figure out how to do something, than to search for a help topic, read it, and then perform the actions. Consequently, users tend to use help only as a last resort.
2. Help today is not actionable. In other words, it cannot be used to automatically execute a task as ACW's can.

ACW's address the issue of the lack of actionability of traditional help content. ACW's generally include code, in one form or another, to interact with the user interface, to essentially play a help topic for a user directly to the user interface. Thus, while an ACW is interacting with the user interface to execute a task on behalf of a user, the ACW will also provide a description to the user regarding the interaction. During playback, the ACW may allow the user to interact with the user interface to enter specific information, such as a filename, etc. ACW's are described, for example, in the above-referenced United States Patent Application 10/337,745, filed January 7, 2003, entitled Active Content Wizard: Execution of Tasks and Structured Content, and published on July 8, 2004 as Publication No. US 2004/0130572 A1.

ACW's are very useful tools for users in that the user can both have a task automatically executed, and can learn how to execute the task themselves by watching the execution of individual steps. However, even with ACW's provided to automatically execute tasks, the above-described problem of users not knowing what features are available still remains.

The present invention provides solutions to one or more of the above-described problems and/or provides other advantages over the prior art.

Theoretical and practical elements of designing an open source User Assistance System is discussed in "Eclipe Help System : An Open Source User Assistance Offering" by K.L. Halsted and J.H Roberts, proceedings of the 20th Annual International Conference on Computer Documentation, October 20, 2002 - October 23, 2002, pages 49-59, Toronto Canada.

### SUMMARY OF THE INVENTION

A computer implemented method of suggesting tasks to a user based upon their graphical user interface (GUI) browsing behavior is provided..In the method, a GUI element is selected or identified based upon the user's browsing behavior, for example based upon the user hovering a pointer over the GUI element. Based upon the selected GUI element, a subset of a plurality of automatically executable procedural help topics is identified. Then, a list of the identified subset of automatically executable procedural help topics is displayed to the user. In displaying the list to the user, in some embodiments, names of the automatically executable procedural help topics are displayed.

Displaying the names of the help topics can comprise, in exemplary embodiments, displaying names of tasks. When the user clicks on the task, an Active Content Wizard (ACW) executes only the remaining steps. For example, consider a task with name N, the steps of which require the user to click on Tools, then Options, then X, then Y, then Z. If the user has already performed (clicked on) Tools and Options, then finds the name N in the list and clicks on it, the ACW will just execute the steps of clicking on X, Y and Z since the user has already done the first two steps in the procedure.

Other features and benefits that characterize embodiments of the present invention will be apparent upon reading the following detailed description and review of the associated drawings.

### BRIEF DESCRIPTION OF THE DRAWINGS

FIG. 1 is a block diagram of one exemplary environment in which the present invention can be used.
FIG. 2 is a screen shot providing a graphical illustration of a data structure which is used in some embodiments of the present invention.
FIG. 3 is a block diagram illustrating a system for generating the graph data structure represented by the graph in FIG. 2.
FIG. 4 is another screen shot providing a graphical illustration of the data structure shown in FIG. 2, and demonstrating further aspects of inventive embodiments.
FIGS. 5 and 6 are screen shots of graphical user interfaces (GUIs) in accordance with embodiments of the present invention.
FIG. 7 is a block diagram illustrating a system in accordance with an illustrative embodiment of the present invention.
FIG. 8 is a flow diagram illustrating a method in accordance with an embodiment of the present invention.

### DETAILED DESCRIPTION OF ILLUSTRATIVE EMBODIMENTS

The present invention includes methods, systems and concepts for aiding a user in discovering tasks which can be executed with the help of help content or ACW's. Prior to describing the present invention in greater detail, one exemplary environment in which the invention can be used will be discussed.

### I. Exemplary Environment

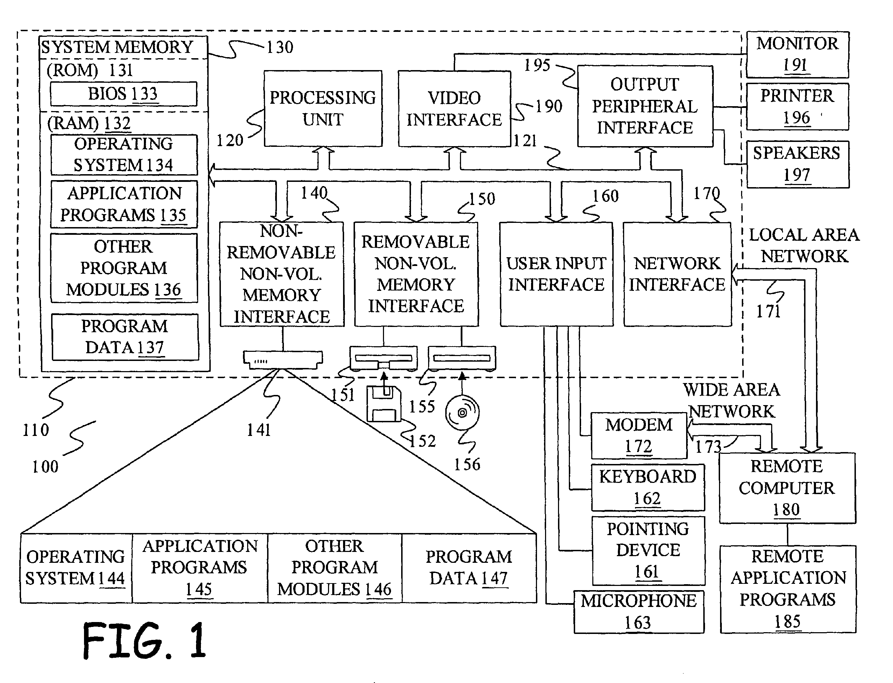

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

### II. "What can I do now?" Method, System and Concepts

The present invention includes a lightweight solution to presenting user assistance that allows the user to browse help in context with the GUI. This solution is embodied in methods and systems, for example as described in the following illustrative embodiments. This solution - which is referred to here as *"What can I do now?" -* uses widgets in the GUI as a way of accessing help. This, along with ACW technology, makes help contextual and actionable. Widgets, as used hereafter, refers to UI control elements such as tabs, buttons, slide bars, icons, selectable menu items, check boxes, text boxes, and other UI elements which can be clicked on, typed on, or otherwise selected and manipulated to carry out a task.

The solution provided by the present invention builds a data structure that takes procedural help topics, and maps them to the GUI. Using this data structure, users' UI-browsing experiences can be radically improved. This data structure can be used to get the following benefits:

### For the end-user:

- See lists of tasks they can do, while browsing.
- Learn about relevant and interesting (to them!) features, that they didn't know about.
- More efficiently perform actions that have many steps.

### For the product team:

- The invention is not difficult to implement, and results in almost zero incremental authoring costs.
- The invention provides a solution which scales well and feels predictable to the end user, yet is powerful.

The proposed solution, *"What can I do now?"* will help end users of the application with the following questions:
1. What can I do with this UI widget?
2. What features of interest are there in the application?

In complex GUI applications, users have a very hard time finding features of the application. For example in Microsoft Office, it is very hard to add new features as the GUI is saturated. In fact the top 10 most frequently requested features in Microsoft Office already exist in Office, but users do not know about them. The present invention enhances or increases the discoverability of features in GUI applications. Further, the present invention provides a very useful way for users of applications to launch tasks and get their work done. Users can browse the application for tasks of interest and launch them.

Currently, when users are unable to figure out how to accomplish something using the GUI, they are forced to switch context to a help place. *"What can I do now?*" is a better UI browsing experience in such a situation as it presents assistance in language which is easy for the users to understand, and is in context to browsing the UI. Also, *"What can I do now?"* is a very light-weight solution and can be updated to present newer help topics and other changes after the application has shipped. *"What can I do now?"* can be used to list and launch traditional help topics, as well as Active Content Wizard (ACW) executable help topics.

A description of ACW's and ACW technology is provided, for example, in the above-referenced United States Patent Application 10/337,745, filed January 7, 2003, entitled Active Content Wizard: Execution of Tasks and Structured Content, and published on July 8, 2004 as Publication No. US 2004/0130572 A1. In summary, ACW technology allows application authors to write executable help topics. Active Content Wizards store UI automation information about each UI element in the procedure. The recorded scripts can be played back by the ACW runtime engine to either show the user how to complete the task or to do it automatically on their behalf. Further, these recorded scripts can be annotated with state information, so that the help topic/ACW script is aware of context (such as the SKU, domain vs. workgroup, whether the computer is connected to Internet, whether the computer has a document open, etc.).

A typical ACW procedural help topic contains steps that perform actions on the GUI. For example, an ACW script to set the security settings to high in Microsoft Word would click on the *Tools* button, then click *Options,* select the *Security* tab, click *Macro Security,* select the *Security* Level tab, and select the checkbox for *High.* The only useful action here is checking on the final checkbox, but the user still has to perform all the other steps to get to it. This is typical of complex applications where there are a large number of UI elements that are only for navigation.

In accordance with exemplary embodiments of the present invention, each UI element or widget is defined to be a node in a graph. Each node is connected to another if there is a step in an ACW help topic (or in a traditional help topic) where the two UI elements are in a sequence. Therefore, in the above security example, an edge would be added from the *Tools* node to the *Options* node (since the procedure involves clicking the *Tools* menu, followed by the Options sub-menu). Terminal points of this graph are the final nodes in the procedures: the checkboxes that actually set a value, the text boxes where values are stored, the buttons where choices are really committed. A terminal node will correspond to the final step in a procedural help topic.

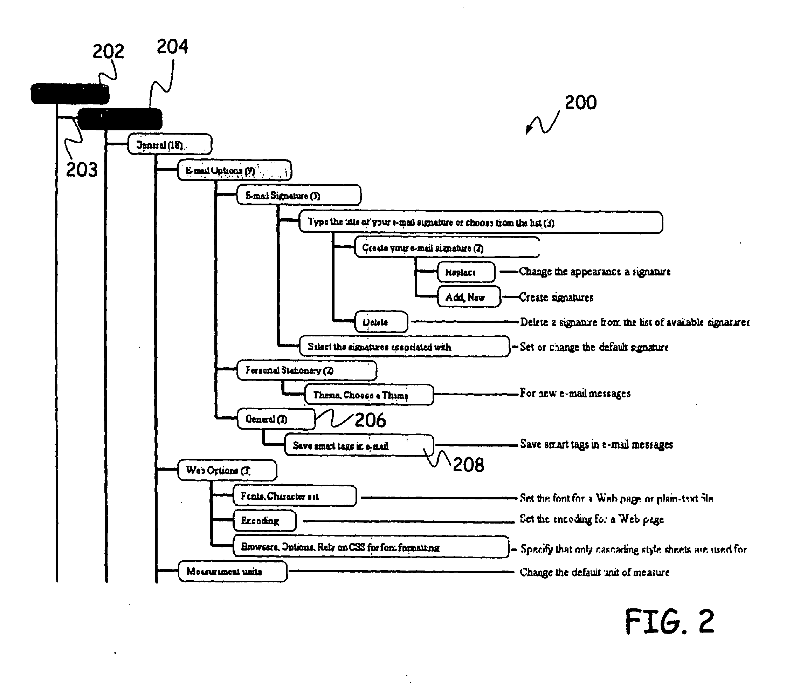

Taking the union of all such procedural help topics, the graph can be generated. In an example embodiment, an excerpt of such a graph for Microsoft Word could be as illustrated in graph 200 shown in FIG. 2. In graph 200, each box or node represents a UI element. For example, Tools node 202 represents the *"Tools"* UI element on a UI toolbar. The number in parentheses is the number of tasks that can be reached from this node. By way of example, in the case of tools node 202, this is illustrated as 134 tasks that can be reached from that node. The leaf nodes under any box or node are the procedural help tasks that were used to generate the data structure. For example, leaf node 208 labeled "Save smart tags in e-mail" under node 206 labeled "General" is a procedural help task which is accessible in sequence from node 208 (representing a UI element labeled "General").

As a further example of the graph generation process in which the nodes are connected if there is a step in a help topic where the two UI elements are accessed in sequence, note that for the above security example, an edge 203 is added between tools node 202 and options node 204 since the procedure involves clicking the *Tools* menu, followed by the Options sub-menu). Edges are similarly added for all steps in ACW help topics to build graph 200.

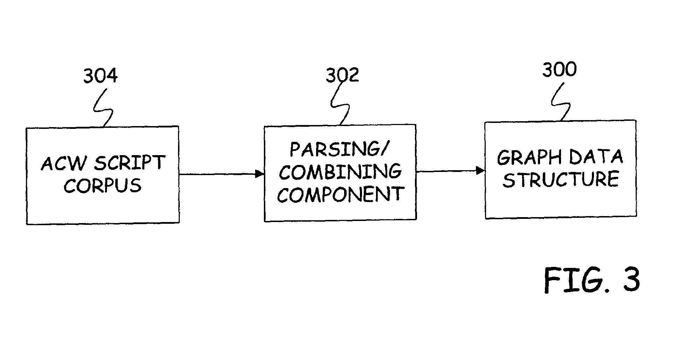

The graph data structure can be programmatically constructed by parsing and combining the ACW script files. This requires no extra effort from application authors - they just create their ACW scripts, and the graph can be constructed from that corpus. FIG. 3 illustrates a system and component for generating these types of graph data structures. As shown in FIG. 3, a parsing/combining component 302 accesses the ACW script corpus 304. Using corpus 304, graph data structure 300 is created having the characteristics (i.e., connection of nodes, identification of leaf nodes, etc.) and in the manner described above. Graph data structure 300 is intended to generally and diagrammatically illustrate data structures which represent graphs such as graph 200 shown in FIG. 2. While parsing/combining component 302 is illustrated as a single component, in other embodiments which are also intended to be represented diagrammatically, separate parsing and combining components are used. In these embodiments, the parsing component parses the ACW scripts in the ACW script corpus 304 to identify the various steps (and corresponding nodes) in the ACW help topics. The separate combining component then combines the various parses to generate the graph data structure 300.

### What can I do now?

Once graph data structure 200/300 has been created, each of the leaf nodes represents a feature that a user might be interested in. So, when a user is browsing the GUI, say when they hover over the menu item *Find* in Microsoft Word, they can automatically be shown all tasks that can be accomplished using that UI element. To accomplish this, the user is shown all UI elements (or corresponding descriptions) associated with the leaf nodes that are below that node (corresponding to the *Find* UI element) in the graph. Effectively, this makes browsing much more useful, since instead of simply seeing the word "Find", the user can see "Search for words that sound like a given word", "Search for text using wildcards", "Find all forms of a given word", etc.

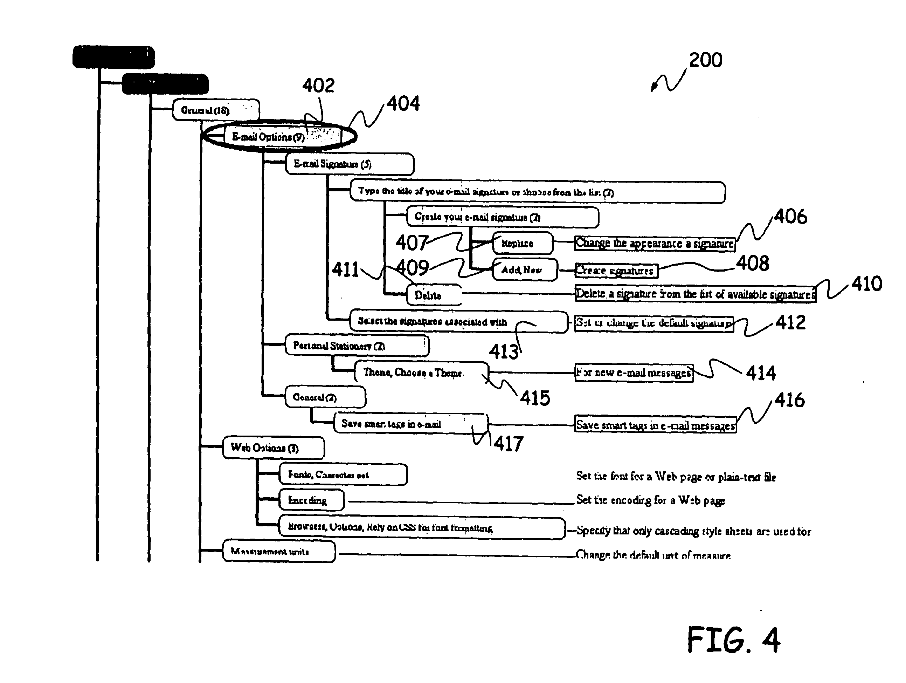

Referring now to FIG. 4, shown is an example in the context of graph 200 originally illustrated in FIG. 2. In accordance with some embodiments of the present invention, when the user hovers (i.e., hovers the GUI pointer) over the UI element or widget "E-*mail Options"* 402 (hovering represented diagrammatically at 404), the graph 200 makes it easy to work out what can be accomplished with that UI element. Systems and methods of the present invention use this internal data structure to present a useful list to the user. For example, using the graph data structure represented by graph 200, this would result in the text descriptions 406, 408, 410, 412, 414 and 416 associated respectively with leaf nodes 407, 409, 411, 413, 415 and 417 to be displayed to the user.

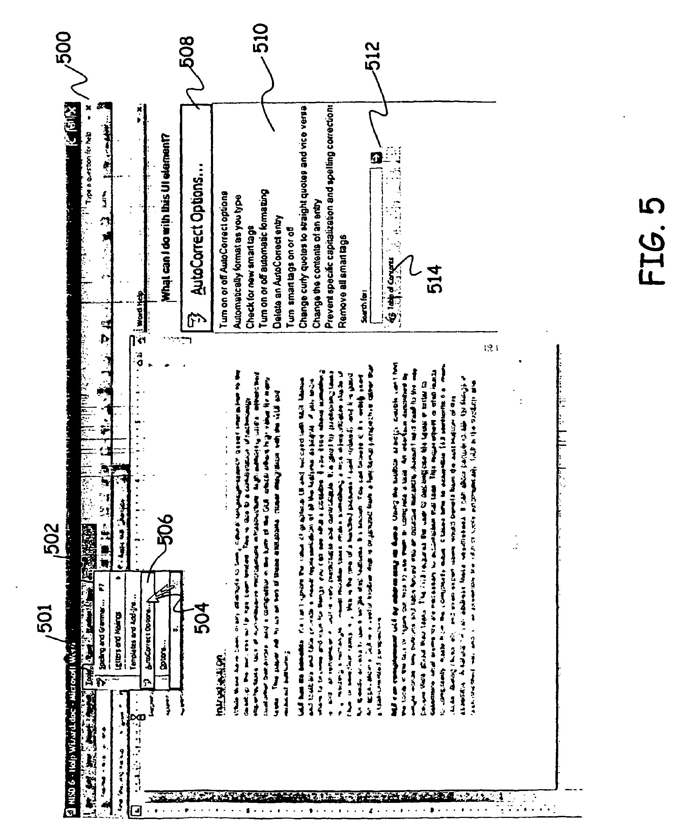

Referring now to the screen shot illustrated in FIG. 5, another example is provided, this time illustrating an embodiment of the invention from the perspective of the generated GUI 500. The screen shot included in FIG. 5 illustrates the Microsoft Word application with a tools drop down menu 502 displayed (in response to clicking on the tools item or element 501). With pointer 504 controlled by the user to hover over the *AutoCorrect Options* menu item 506, the GUI generation engine or component generates a *"What can I do now?"* window 508. Window 508 displays the procedures (in list 510) that use this menu item. These procedures are text descriptions corresponding to leaf nodes, under an *AutoCorrect Options* node, in a graph data structure similar to the ones illustrated in FIGS. 2 and 4. If the user chooses one of the procedures by clicking on it in list 510 of window 508, it will execute if it is implemented as an ACW script. In some embodiments, from the *"What can I do now?"* window 508, a search of the procedures can be conducted using a search function and GUI search window 512, or a table of contents for the procedures can be viewed by clicking on GUI element or item 514.

The *"What can I do now?"* concepts of the present invention are very effective when the user is not very sure how to accomplish some task or when they are trying to learn what features are available in the application. When they already know what are doing, it can be distracting and can easily be turned off.

### Conditions

Many procedures have pre-conditions. For example, if the user does not have the Japanese language pack installed, the procedure "Add emphasis to Japanese characters" does not make sense. The graphs corresponding data structures can be constructed so that only those procedures or tasks whose pre-conditions are true (or met) are shown.

### Procedures based on document context

A number of procedures require slots to be filled in. For example, to "Split cells in a table", the user needs to select a cell in the table. This information can be authored as part of the ACW script as a user action. (For example: Step 1: Select the cell you want to split. Step 2: Click Table, click Split Cells.). Thus when the user selects an object in the document that is a slot value to a task, *"What can I do now?"* can display tasks that take the object as a slot. For example, if the cursor or is inside a table cell, *"What* t *can I do now?"* can show the tasks "Split cells in a table", "Format the table" etc. These are further examples of imposing conditions on the *"What can I do now?"* concepts of the present invention.

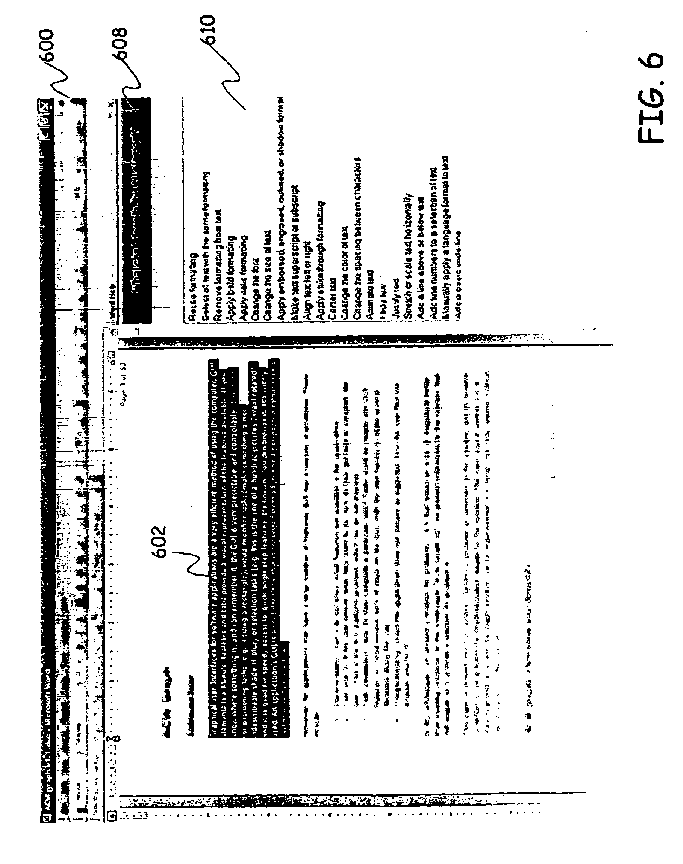

Referring now to the screen shot illustrated in FIG. 6, another example is provided, this time illustrating an embodiment of the invention from the perspective of the generated GUI 600. FIG. 6 illustrates an example of how conditions can be imposed on the methods, systems and concepts of the present invention. *"What can I do now?"* can react to conditions in the document such as selecting text, or selecting rows or tables, in much the same way that it reacts to the user hovering over menus while exploring the UI. As illustrated in FIG. 6, selected text 602 is shown. Based upon the fact that text has been selected, and/or upon the characteristics (formatting, etc) of the selected text, the GUI generation engine or component generates a *"What can I do now?"* window 608 which contains procedures (in list 610) that can be performed on the selected text.

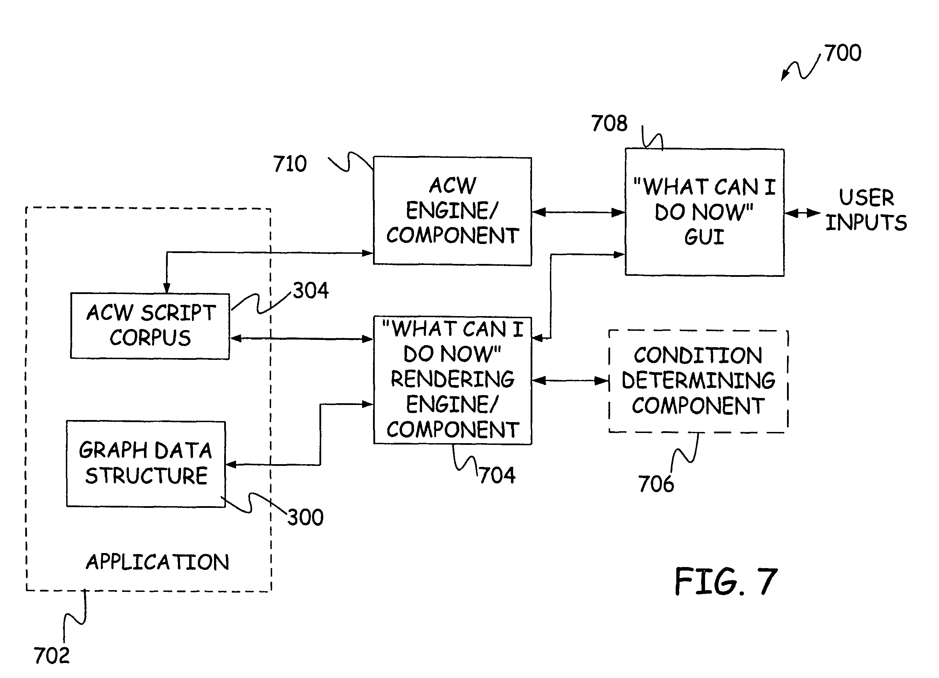

FIG. 7 is a block diagram illustrating a system 700 which is configured to implement the methods and concepts of the present invention. System 700 includes a *"What can I do now?"* rendering engine or component 704 which uses graph data structure 300 and ACW script corpus 304 to render the *"What can I do now?"* portion 708 of the GUI (for example as illustrated in FIGS. 5 and 6) based upon user inputs as described above. Optionally, a condition determining component 706 can be included in system 700 to determine what tasks can be executed based upon one or more pre-conditions as described above. The GUI rendering engine 704 can also render the remainder of the GUI, but this aspect is omitted from FIG. 7 to simplify the illustration. Based upon further user inputs through *"What can I do now?"* GUI 708, ACW runtime engine or component 710 executes the corresponding ACW script from corpus 304. It should be noted that system 700 is only one illustrative embodiment of the present invention, and does not limit the invention to this particular embodiment. For example, while ACW scripts corpus 304 and graph data structure 300 are shown as being included in an application program 702, this need not be the case and either or both of these can be separate from the relevant application program.

To summarize, the "What can I do now?" technology, the graph data structure includes a reverse mapping of some or all of the authored ACW scripts. Typically, ACW scripts include:
1. Conditions
2. A path through the GUI.
3. Slots that require users to enter some values.
4. Slots that require users to select something on the screen (e.g. table, list, text, image, cell in a spreadsheet, column etc)

The graph can be constructed such that the GUI will display the script title whenever:
- All the pre-conditions are met, and the user is hovering over one of the UI elements along the path outlined in the ACW script; or
- All the pre-conditions are met, and the user has selected something on the screen that is a valid slot value for the ACW script.

Other extensions to the general concepts described above are also considered to be within the scope of the invention. For example, machine learning techniques can be used to provide relevance ranking of what tasks are possible/available for any given context, or menu choice. This will allow a ranked list of tasks to be presented to the user, making the user's GUI browsing experience more efficient.

Further, a system for instrumenting and gathering feedback, about the tasks that are used by users in order to understand how an application is being used, can be employed with the present invention to report back what procedures people actually did, and then to try to identify patterns. Then, after some learning based on the gathered usage data, tasks can be suggested in an intelligent manner, for example by saying "people who printed envelopes also did a mail merge", or "people who printed many pages per sheet also printed both side, and set up a certain kind of page numbering".

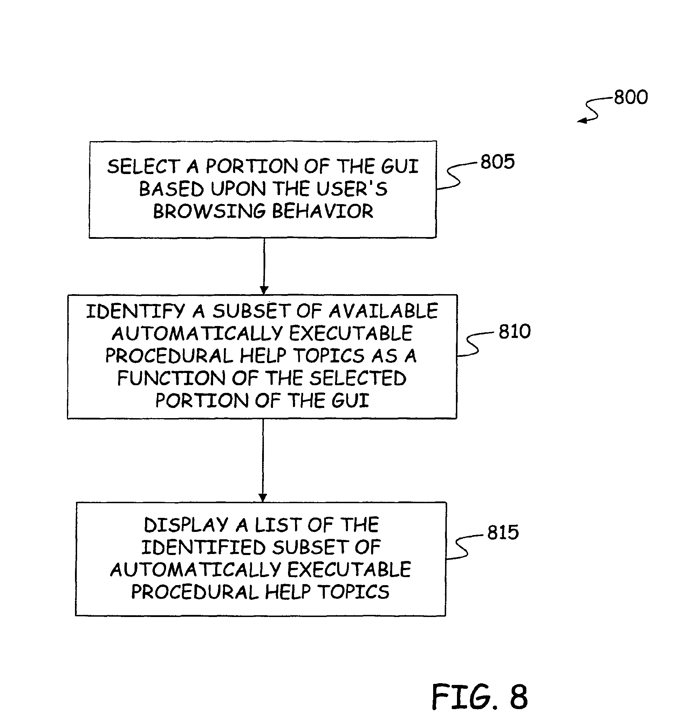

Referring now to FIG. 8, a flow diagram 800 illustrating a general method of suggesting tasks to a user based upon their GUI browsing behavior is illustrated. As shown at step 805, the method includes selecting a portion of the GUI based upon the user's s browsing behavior. As discussed above, this can be the selection (e.g., via hovering over a UI element) of a GUI control element, or the selection of text on the GUI (e.g., by controlling a pointer to highlight the text), or other types of selection. Next, as illustrated at step 810, the method includes identifying a subset of a available automatically executable procedural help topics (e.g. ACW scripts or files) as a function of the selected portion of the GUI. As described above, this step is performed using a graph data structure, such as the ones represented in FIGS. 2 and 4. Then, as illustrated at step 815, the list of the identified subset of automatically executable procedural help topics is displayed to the user. Selection of one of the displayed automatically executable procedural help topics results in the execution of that procedural help topic.

The steps of the method illustrated in FIG. 8 can, in more particular embodiments, be as described above with reference to FIGS. 2-7. For example, step 810 can include the sub-steps of identifying a node in the graph data structure which corresponds to the selected GUI element, and identifying terminal leaf nodes on branches from the node in the graph data structure, with the terminal leaf nodes corresponding to final steps in procedural help topics. Step 815 can then include displaying names of the procedural help topics which correspond to the identified terminal leaf nodes. Also as described above with reference to FIG. 5, the names can be displayed with a search function GUI element to allow the user to search the list using the search function, or with a Table of Contents GUI element.

The method can also include the above-described steps of determining whether pre-conditions associated with individual automatically executable procedural help topics have been satisfied, and displaying the list as a function of whether the pre-conditions associated with individual procedural help topics have been satisfied. These pre-conditions can be based, for example, upon document context. Further, the list of help topics can be displayed as a function of the user's past browsing behavior, for example by sorting the help topics based upon the most recent actions taken by the user.

Although the present invention has been described with reference to particular embodiments, workers skilled in the art will recognize that changes may be made in form and detail.

## Claims

1. A computer implemented method of suggesting tasks to a user based upon their graphical user interface (GUI) browsing behavior, the method comprising:
selecting a GUI element based upon the user's browsing behavior, wherein each GUI element is defined to be a node in a graph;
identifying a subset of a plurality of automatically executable procedural help topics as a function of the selected GUI element comprising identifying the subset of the plurality of procedural help topics using a graph data structure, wherein a help topic contains steps that perform actions on the GUI, and wherein the graph data structure is generated taking the union of all procedural help topics comprising:
identifying a node in the graph data structure which corresponds to the selected GUI element, wherein each node is connected to another if there is a step in a help topic where the two user interface elements are in a sequence; and
identifying terminal leaf nodes on branches from the node in the graph data structure which corresponds to the selected GUI element, the terminal leaf nodes corresponding to final steps in procedural help topics; and
displaying a list of the identified subset of automatically executable procedural help topics, wherein displaying the list comprises displaying names of the procedural help topics which correspond to the identified terminal leaf nodes.

2. The computer implemented method of claim 1, wherein identifying the subset of the plurality of automatically executable procedural help topics as the function of the selected GUI element further comprises identifying a subset of a plurality of active content wizards as a function of the selected GUI element.

3. The computer implemented method of claim 1, and further comprising determining whether pre-conditions associated with individual ones of the identified subset of automatically executable procedural help topics have been satisfied, wherein the step of displaying the list of the identified subset of automatically executable procedural help topics is performed as a function of whether the pre-conditions associated with individual ones of the identified subset of automatically executable procedural help topics have been satisfied.

4. The computer implemented method of claim 1, wherein the step of displaying the list of the identified subset of automatically executable procedural help topics further comprises displaying the list as a function of the user's past browsing behavior.

5. The computer implemented method of claim 1, wherein selecting the GUI element comprises selecting a portion of the GUI based upon the user's browsing behavior by selecting text or any other visible object on the GUI.

6. The computer implemented method of claim 1, wherein displaying the list of the identified subset of automatically executable procedural help topics further comprises displaying a search function GUI element with the list to allow the user to search the list using the search function.

7. The computer implemented method of claim 1, wherein identifying the subset of the plurality of automatically executable procedural help topics as a function of the selected GUI element further comprises identifying the subset of the plurality of automatically executable procedural help topics based upon document context.

8. The computer implemented method of claim 1, wherein displaying the list of the identified subset of automatically executable procedural help topics further comprises displaying a table of contents sort function GUI element with the list to allow the user to view a table of contents for the list.

9. A computer readable medium having stored thereon computer executable instructions for implementing the steps of method claims 1-8.

## Patentansprüche

1. Computerimplementiertes Verfahren, mit dem einem Benutzer Aufgaben auf Basis seines Browsing-Verhaltens an einer graphischen Benutzeroberfläche vorgeschlagen werden, wobei das Verfahren umfasst:
Auswählen eines Benutzeroberflächen-Elementes auf Basis des Browsing-Verhaltens des Benutzers, wobei jedes Benutzeroberflächen-Element so definiert ist, dass es ein Knoten in einem Graph ist;
Identifizieren einer Teilgruppe einer Vielzahl automatisch ausführbarer prozedualer Hilfe-themen in Abhängigkeit von dem ausgewählten Benutzeroberflächen-Element, wobei dies Identifizieren der Teilgruppe prozedualer Hilfe-Themen unter Verwendung einer Graphen-Datenstruktur umfasst, ein Hilfe-Thema Schritte zum Durchführen von Aktionen an der Benutzeroberfläche beinhaltet und die Graphen-Datenstruktur unter Verwendung der Gesamtheit aller prozedualen Hilfe-Themen erzeugt wird, wobei dies umfasst:
Identifizieren eines Knotens in der Graphen-Datenstruktur, der dem ausgewählten Benutzeroberflächen-Element entspricht, wobei jeder Knoten mit einem anderen verbunden ist, wenn ein Schritt in einem Hilfe-Thema vorhanden ist, in dem die zwei Benutzeroberflächen-Elemente aufeinanderfolgen; und
Identifizieren von Abschluss-Blattknoten an Zweigen von dem Knoten in der Graphen-Datenstruktur, der dem ausgewählten Benutzeroberflächen-Element entspricht, wobei die Abschluss-Blattknoten abschließenden Schritten in den prozedualen Hilfe-Themen entsprechen; und
Anzeigen einer Liste der identifizierten Teilgruppe automatisch ausführbarer prozedualer Hilfe-Themen, wobei Anzeigen der Liste Anzeigen von Namen der prozedualen Hilfe-Themen umfasst, die den identifizierten Abschluss-Blattknoten entsprechen.

2. Computerimplementiertes Verfahren nach Anspruch 1, wobei Identifizieren der Teilgruppe der Vielzahl automatisch ausführbarer prozedualer Hilfe-Themen in Abhängigkeit von dem ausgewählten Benutzeroberflächen-Element des Weiteren Identifizieren einer Teilgruppe einer Vielzahl von Assistenten für aktiven Inhalt als Funktion des ausgewählten Benutzeroberflächen-Elementes umfasst.

3. Computerimplementiertes Verfahren nach Anspruch 1, das des Weiteren umfasst, dass festgestellt wird, ob Vorbedingungen erfüllt worden sind, die mit einzelnen der identifizierten Teilgruppe automatisch ausführbarer prozedualer Hilfe-Themen verknüpft sind, wobei der Schritt des Anzeigens der Liste der identifizierten Teilgruppe automatisch ausführbarer prozedualer Hilfe-Themen in Abhängigkeit davon durchgeführt wird, ob die Vorbedingungen erfüllt worden sind, die mit einzelnen der identifizierten Teilgruppe automatisch ausführbarer prozedualer Hilfe-Themen verknüpft sind.

4. Computerimplementiertes Verfahren nach Anspruch 1, wobei der Schritt des Anzeigens der Liste der identifizierten Teilgruppe automatisch ausführbarer prozedualer Hilfe-Themen des Weiteren Anzeigen der Liste in Abhängigkeit von dem Browsing-Verhalten des Benutzers in der Vergangenheit umfasst.

5. Computerimplementiertes Verfahren nach Anspruch 1, wobei Auswählen des Benutzeroberflächen-Elementes Auswählen eines Abschnitts der Benutzeroberfläche auf Basis des Browsing-Verhaltens des Benutzers durch Auswählen von Text oder jedes beliebigen anderen sichtbaren Objektes auf der Benutzeroberfläche umfasst.

6. Computerimplementiertes Verfahren nach Anspruch 1, wobei Anzeigen der Liste der identifizierten Teilgruppe automatisch ausführbarer prozedualer Hilfe-Themen des Weiteren Anzeigen eines Suchfunktions-Benutzeroberflächen-Elementes zusammen mit der Liste umfasst, um einem Benutzer zu gestatten, die Liste unter Verwendung der Suchfunktion zu durchsuchen.

7. Computerimplementiertes Verfahren nach Anspruch 1, wobei Identifizieren der Teilgruppe der Vielzahl automatisch ausführbarer prozedualer Hilfe-Themen in Abhängigkeit von dem ausgewählten Benutzeroberflächenelement des Weiteren Identifizieren der Teilgruppe der Vielzahl automatisch ausführbarer prozedualer Hilfe-Themen auf Basis von Dokumenten-Kontext umfasst.

8. Computerimplementiertes Verfahren nach Anspruch 1, wobei Anzeigen der Liste der identifizierten Teilgruppe automatisch ausführbarer prozedualer Hilfe-Themen des Weiteren Anzeigen eines Benutzeroberflächen-Elementes mit Inhaltsverzeichnis-Sortierfunktion zusammen mit der Liste umfasst, um dem Benutzer zu gestatten, ein Inhaltsverzeichnis für die Liste zu betrachten.

9. Computerlesbares Medium, auf dem durch Computer ausführbare Befehle zum Implementieren der Schritte der Verfahrensansprüche 1-8 gespeichert sind.

## Revendications

1. Procédé mis en oeuvre par ordinateur de suggestion de tâches à un utilisateur sur la base de son comportement de navigation d'interface utilisateur graphique (GUI), procédé comprenant :
la sélection d'un élément GUI sur la base du comportement de navigation de l'utilisateur, chaque élément GUI étant défini comme étant un noeud d'un graphe ;
l'identification d'un sous-ensemble de plusieurs sujets d'aide procédurale exécutables automatiquement en fonction de l'élément GUI sélectionné comprenant l'identification du sous-ensemble des sujets d'aide procédurale à l'aide d'une structure de données de graphe, un sujet d'aide contenant des étapes exécutant des actions sur l'interface GUI, et la structure de données de graphe étant générée en unissant tous les sujets d'aide procédurale comprenant :
l'identification d'un noeud dans la structure de données de graphe qui correspond à l'élément GUI sélectionné, chaque noeud étant relié à un autre s'il existe une étape d'un sujet d'aide dans laquelle les deux éléments d'interface utilisateur sont compris dans une séquence ; et
l'identification de noeuds feuille terminaux sur des branches à partir du noeud dans la structure de données de graphe correspondant à l'élément GUI sélectionné, les noeuds feuille terminaux correspondant à des étapes finales de sujets d'aide procédurale ; et
l'affichage d'une liste du sous-ensemble identifié de sujets d'aide procédurale exécutables automatiquement, l'affichage de la liste comprenant l'affichage de noms des sujets d'aide procédurale correspondant aux noeuds feuille terminaux identifiés.

2. Procédé mis en oeuvre par ordinateur conformément à la revendication 1, dans lequel l'identification du sous-ensemble des sujets d'aide procédurale exécutables automatiquement en fonction de l'élément GUI sélectionné comprend en outre l'identification d'un sous-ensemble de plusieurs assistants de contenu actifs en fonction de l'élément GUI sélectionné.

3. Procédé mis en oeuvre par ordinateur conformément à la revendication 1 et comprenant en outre la détermination si des conditions préalables associées aux sujets individuels du sous-ensemble identifié de sujets d'aide procédurale exécutables automatiquement ont ou non été satisfaites, l'étape d'affichage de la liste du sous-ensemble identifié de sujets d'aide procédurale exécutables automatiquement étant mise en oeuvre en fonction de la satisfaction ou non des conditions préalables associées aux sujets individuels du sous-ensemble identifié de sujets d'aide procédurale exécutables automatiquement.

4. Procédé mis en oeuvre par ordinateur conformément à la revendication 1, dans lequel l'étape d'affichage de la liste du sous-ensemble identifié de sujets d'aide procédurale exécutables automatiquement comprend en outre l'affichage de la liste en fonction du comportement de navigation passé de l'utilisateur.

5. Procédé mis en oeuvre par ordinateur conformément à la revendication 1, dans lequel la sélection de l'élément GUI comprend la sélection d'une partie de l'interface GUI sur la base du comportement de navigation de l'utilisateur par sélection de texte ou de tout autre objet visible sur l'interface GUI.

6. Procédé mis en oeuvre par ordinateur conformément à la revendication 1, dans lequel l'affichage de la liste du sous-ensemble identifié de sujets d'aide procédurale exécutables automatiquement comprend en outre l'affichage d'un élément GUI fonction de recherche avec la liste pour permettre à l'utilisateur d'effectuer des recherches dans celle-ci à l'aide de la fonction de recherche.

7. Procédé mis en oeuvre par ordinateur conformément à la revendication 1, dans lequel l'identification du sous-ensemble des plusieurs sujets d'aide procédurale exécutables automatiquement en fonction de l'élément GUI sélectionné comprend en outre l'identification du sous-ensemble des sujets d'aide procédurale exécutables automatiquement sur la base du contexte de document.

8. Procédé mis en oeuvre par ordinateur conformément à la revendication 1, dans lequel l'affichage de la liste du sous-ensemble identifié de sujets d'aide procédurale exécutables automatiquement comprend en outre l'affichage d'un élément GUI fonction de tri table des matières avec la liste pour permettre à l'utilisateur de visualiser une table des matières pour la liste.

9. Support lisible par ordinateur dans lequel des instructions exécutables par ordinateur sont stockées pour mettre en oeuvre les étapes du procédé selon les revendications 1 à 8.
